(19) Europäisches Patentamt
European Patent Office
Office européen des brevets

(11) **EP 4 446 135 A1**

(12) **EUROPEAN PATENT APPLICATION**
published in accordance with Art. 153(4) EPC

(43) Date of publication:
**16.10.2024 Bulletin 2024/42**

(21) Application number: **22903753.6**

(22) Date of filing: **16.05.2022**

(51) International Patent Classification (IPC):
**B60C 19/00** (2006.01)   **B60C 1/00** (2006.01)
**B60C 19/08** (2006.01)

(52) Cooperative Patent Classification (CPC):
**B60C 1/00; B60C 3/00; B60C 19/00; B60C 19/08**

(86) International application number:
**PCT/JP2022/020440**

(87) International publication number:
**WO 2023/105815 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.12.2021 JP 2021199586**

(71) Applicant: **BRIDGESTONE CORPORATION**
**Chuo-ku**
**Tokyo 104-8340 (JP)**

(72) Inventor: **ONO, Takatoshi**
**Tokyo 104-8340 (JP)**

(74) Representative: **Marks & Clerk LLP**
**15 Fetter Lane**
**London EC4A 1BW (GB)**

(54) **TIRE**

(57)     A tire 1 includes one or more conductive cords 2 embedded in the tire, and a communication device 10 embedded in the tire, in which a number of intersection points of the communication device and the one or more conductive cords is less than two on a projection plane in a tire width direction.

*FIG. 1*

**Description**

TECHNICAL FIELD

This disclosure relates to a tire.
This application claims Japanese Patent Application No. 2021-199586 filed in Japan on December 8, 2021, the entire contents of which is incorporated herein.

BACKGROUND

There has been a tire in which a conductive cord is embedded in the tire to ensure a conductive path (PTL 1).

CITATION LIST

Patent Literature

PTL 1: JP2017-124730A

SUMMARY

(Technical Problem)

We have arrived at embedding a communication device (such as a RF tag) in a conventional tire as described above. In addition, we have arrived at a novel configuration that can suppress inhibition of the communication performance of the communication device by conductive cords to improve communication stability.
It could be helpful to provide a tire that can improve the communication stability of the communication device.

(Solution to Problem)

Our tire is a tire, including

one or more conductive cords embedded in the tire, and
a communication device embedded in the tire, in which
a number of intersection points of the communication device and the one or more conductive cords is less than two
on a projection plane in a tire width direction.

(Advantageous Effect)

We can provide a tire that can suppress the damage to the communication device.

BRIEF DESCRIPTION OF THE DRAWINGS

In the accompanying drawings:

Fig. 1 is a projection plane view in the tire width direction illustrating a tire according to a first embodiment of the disclosed embodiments.
Fig. 2 is a cross-sectional view in the tire width direction illustrating a portion of the tire in Fig. 1 in the cross-section taken along the line A-A in Fig. 1;
Fig. 3 is a perspective view of illustrating an example of a communication device that can be use in a tire according to any one of the disclosed embodiments;
Fig. 4 is an exploded perspective view of illustrating the disassembled communication device in Fig. 3;
Fig. 5 is a projection plane view in the tire width direction illustrating a tire according to a second embodiment of the disclosed embodiments; and
Fig. 6 is a cross-sectional view in a tire width direction illustrating a tire according to a third embodiment of the disclosed embodiments.

DETAILED DESCRIPTION

Our tire can be suitable for use in any type of pneumatic tire, particularly a passenger vehicle pneumatic tire.

By way of example, embodiments of our tire will be described below with reference to the drawings.

Common members and portions appearing in the drawings have the same reference signs. In some of the drawings, the tire width direction is represented by a reference sign "WD", the tire radial direction is represented by a reference sign "RD", and the tire circumferential direction is represented by a reference sign "CD". In this description, the side near the tire inner cavity is referred to as "tire inner side" and the side far from the tire inner cavity from is referred to as "tire outer side".

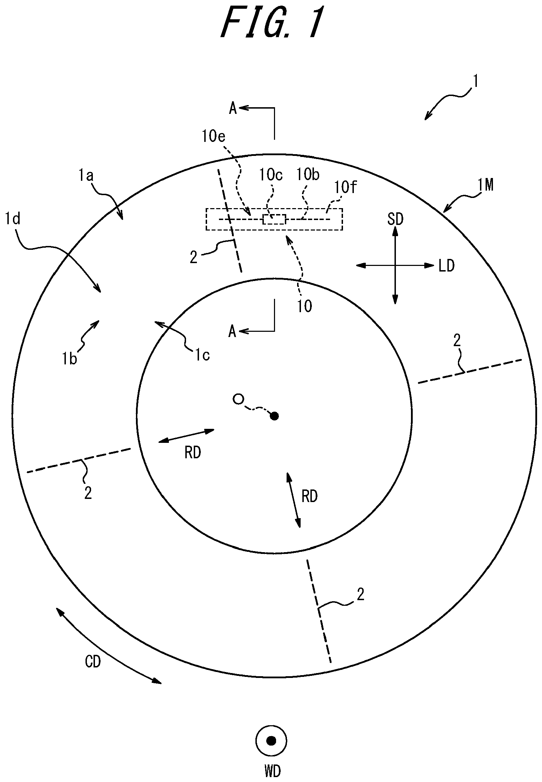

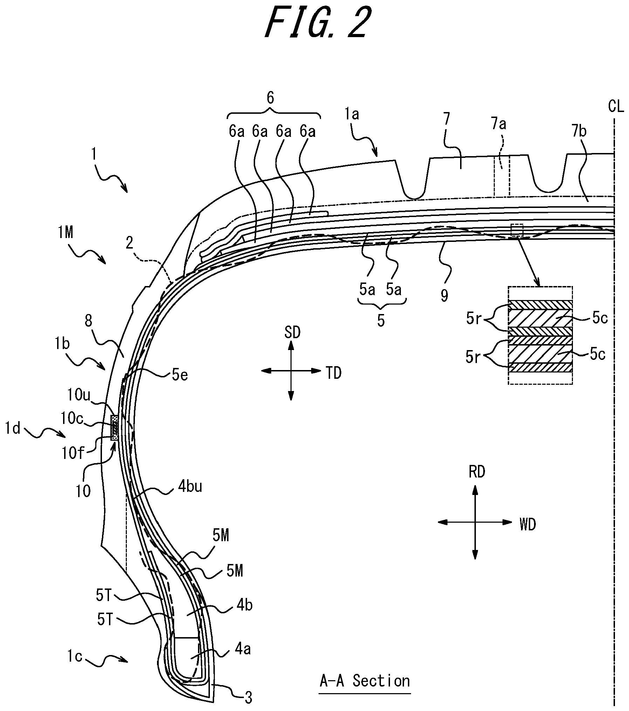

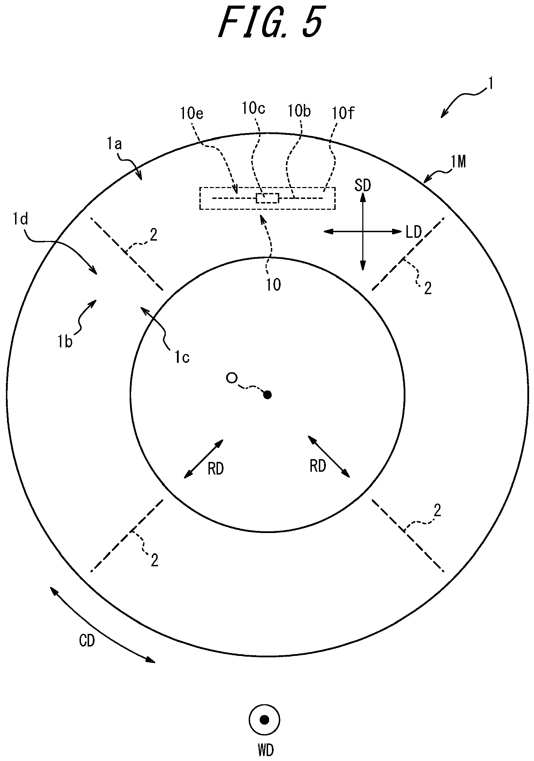

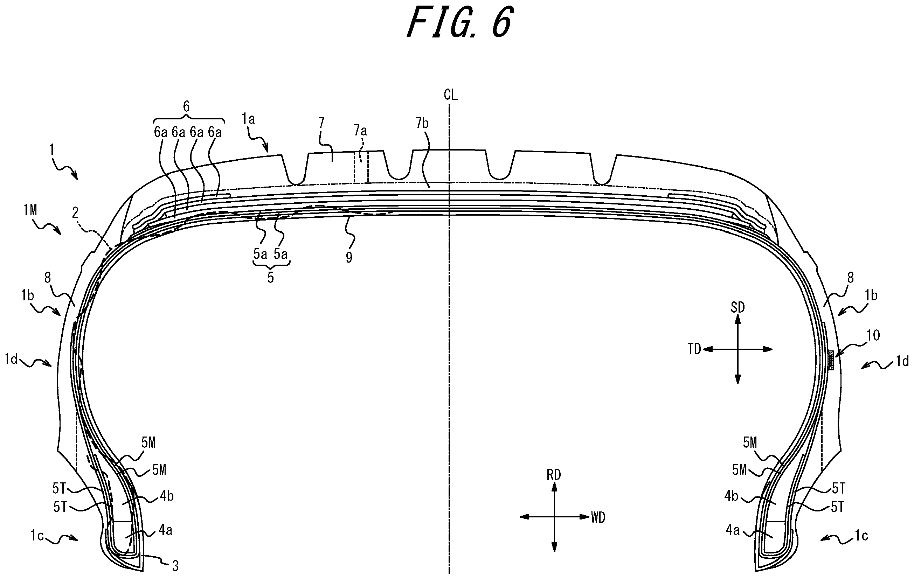

Figs. 1 and 2 illustrate a tire 1 according to a tire 1 according to a first embodiment of the disclosed embodiments. Fig. 1 illustrates a projection plane in which a tire 1 according to a first embodiment of the disclosed embodiments is projected in the tire width direction (the projection plane in the tire width direction). Fig. 2 is a cross-sectional view in the tire width direction illustrating a portion of the tire 1 in Fig. 1 (specifically, a portion of the tire on one side in relation to the tire equatorial plane CL) in the cross-section taken along the line A-A in Fig. 1. Fig. 5 is a projection plane view in the tire width direction illustrating a tire 1 according to a second embodiment of the disclosed embodiments. Fig. 6 is a cross-sectional view in a tire width direction illustrating a tire 1 according to a third embodiment of the disclosed embodiments.

The tire 1 according to each of the embodiments in Figs. 1, 2, 5, and 6 is a passenger vehicle pneumatic tire. For convenience of description, these embodiments are described together below.

The tire 1 according to any one of the disclosed embodiments can be any type of a tire.

The tire 1 includes a tire body 1M and a communication device 10. The tire body 1M corresponds to a portion of the tire 1 excluding the communication device 10.

Hereinafter, unless otherwise specified, the positional relationship, dimensions, and the like of the components shall be determined under reference conditions where the tire 1 is installed on an applicable rim, set at a prescribed internal pressure, and unloaded. The width, in a tire width direction, of a contact patch that is contact with a road surface under conditions where the tire 1 is installed in an applicable rim, set at a prescribed internal pressure, and subjected to maximum load is referred to as the ground contact width of a tire, and an end of the contact patch in the tire width direction is referred to as ground contact end.

In this description, the term "applicable rim" refers to a standard rim (Measuring Rim in STANDARDS MANUAL of ETRTO and Design Rim in YEAR BOOK of TRA) having an applicable size that is specified or will be specified in an industrial standard effective in the region where pneumatic tires are produced and used, such as JATMA YEAR BOOK of JATMA (the Japan Automobile Tyre Manufacturers Association) in Japan, STANDARDS MANUAL of ETRTO (The European Tyre and Rim Technical Organisation) in Europe, and YEAR BOOK of TRA (The Tire and Rim Association, Inc.) in the United States. However, with regard to sizes that are not specified in the above-mentioned industrial standards, the term "applicable rim" refers to a rim having a width corresponding to the bead width of a pneumatic tire. The "applicable rim" includes sizes that will be specified in the above-described industrial standards, in addition to currently specified sizes. Examples of "size that will be specified" can include a size specified as "FUTURE DEVELOPMENTS" in ETRTO 2013 version.

In this description, the term "prescribed internal pressure" refers to an air pressure corresponding to the maximum load capacity of one wheel having an applicable size and ply rating that is specified or will be specified in an industrial standard such as the above-described JATMA YEAR BOOK (maximum air pressure). However, with regard to sizes not specified in the above-described industrial standards, the term "prescribed internal pressure" refers to an air pressure corresponding to the maximum load capacity defined for each vehicle in which the tire is installed (maximum air pressure). In this description, the term "maximum load" refers to a load corresponding to the maximum load capacity of a tire having an applicable size defined in the above-described industrial standard, or with regard to sizes not specified in the above-described industrial standards, refers to a load corresponding to the maximum load capacity specified for each vehicle in which a tire is installed.

First of all, the tire body 1M will be described.

In each of the embodiments disclosed in this description, as illustrated in Figs. 2 and 6, the tire body 1M includes the tread portion 1a, a pair of sidewall portions 1b extending from both ends of the tread portion 1a in the tire width direction toward the tire radially inner side, and a pair of bead portions 1c provided at an end, on the tire radially inner side, of each of the sidewall portions 1b. The tread portion 1a is a tire widthwise portion, of the tire body 1M, between a pair of ground contact ends. The tread portion 1a is a tire widthwise portion, of the tire body 1M, between a pair of ground contact ends. The bead portion 1c is configured to be in contact with a rim on the tire radially inner side and the tire widthwise outer side when the tire 1 is installed on the rim.

The tire body 1M includes a pair of tire side portions 1d extending from both ends of the tread portion 1a in the tire width direction toward the tire radially inner side. The tire side portion 1d consists of a sidewall portion 1b and a bead portion 1c.

The tire body 1M includes a pair of bead cores 4a, a pair of bead fillers 4b, a carcass 5, a belt 6, a tread rubber 7, a side rubber 8, an inner liner 9, and one or more conductive cords 2.

The bead cores 4a are embedded in the respective bead portions 1c. The bead core 4a includes a plurality of bead wire coated with a rubber. The bead wire is preferably made of metal (for example, steel). The bead wire can consist of, for example, monofilaments or twisted wires. The bead wire may be made of organic fibers or carbon fibers.

The bead fillers 4b is positioned on the tire radially outer side relative to the respective bead cores 4a. The bead filler 4b extends, in a tapered manner, toward the tire radially outer side. The bead filler 4b is made of rubber, for example.

The carcass 5 ranges between a pair of bead cores 4a and extends to have a toroidal shape. The carcass 5 is constituted by one or more (in each of the embodiments in Figs. 2 and 6, two) carcass plies 5a. Each of the carcass plies 5a includes one or more carcass cords 5c, and a coating rubber 5r coating a carcass cord 5c (Fig. 2). The carcass cord 5c can be formed by monofilaments or twisted wires.

The carcass cord 5c is preferably made of organic fibers such as polyester, nylon, rayon, and aramid.

The carcass ply 5a includes a ply main body 5M between a pair of bead cores 4a. The carcass ply 5a can further include ply turn-up portions 5T that extend from both ends of the ply main body 5M and are turned up around the bead cores 4a from the tire widthwise inner side toward the tire widthwise outer side. In this regard, the carcass ply 5a may not include a ply turn-up portion 5 T.

The ply main body 5M is positioned on the tire widthwise inner side relative to the bead filler 4b and the bead core 4a. The ply turn-up portion 5T is positioned on the tire widthwise outer side relative to the bead filler 4b and the bead core 4a.

The carcass 5 is preferably of radial structure and may be of bias structure.

The belt 6 is disposed on the tire radially outer side in relation to the crown portion of the carcass 5. The belt 6 includes one or more belt layers 6a. Each of the belt layers 6a includes one or more belt cords and a coating rubber coating the belt cord. The belt cord can be formed of monofilaments or twisted wires. The belt cord can be made of metal (for example, steel) and can also be made of organic fibers such as polyester, nylon, rayon, and aramid.

At the tread portion 1a, the tread rubber 7 is positioned on the tire radially outer side of the belt 6. The tread rubber 7 constitutes a tread surface, which is a surface on the tire radially outer side of the tread portion 1a. On the tread surface, a tread pattern is formed.

The side rubber 8 is positioned on the sidewall portion 1b. The side rubber 8 constitutes an outer surface, on the tire widthwise outer side, of the sidewall portion 1b. The side rubber 8 is positioned on the tire widthwise outer side relative to the carcass 5. The side rubber 8 is positioned on the tire widthwise outer side relative to the bead filler 4b. The side rubber 8 is formed to be integrated with the tread rubber 7.

The inner liner 9 is disposed on the tire inner side of the carcass, and can be laminated, for example, on the tire inner side of the carcass 5. The inner liner 9 is made of a butyl-based rubber having low air permeability, for example. Examples of the butyl-based rubbers include butyl rubbers and halogenated butyl rubbers, which are derivatives of butyl rubbers. The inner liner 9 is not limited to a butyl-based rubber and may be made of other rubber compositions, resins, or elastomers.

As illustrated in Figs. 2 and 6, the tire body 1M can include a chafer 3 in the bead portion 1c. The chafer 3 is disposed on the side opposite to the bead core 4a in relation to the carcass 5.

In each of the embodiments disclosed in this description, as illustrated in Figs. 1, 2, 5, and 6, the tire body 1M includes one or more (in each of the embodiments in Figs. 1, 2, 5, and 6, four) conductive cords 2. The one or more conductive cords 2 are embedded in the tire 1 (and hence, the tire body 1M).

The conductive cord 2 is electrically conductive. As a result of the matter that the tire 1 includes the conductive cord 2, a conductive path in the tire 1 can be ensured and static electricity that can be generated in the tire 1 can be effectively released to road surface through the conductive cord 2. In other words, the electric resistance of the tire 1 can be reduced. This is particularly preferable from a standpoint of establishing a balance between lower loss and reduction in electric resistance because, when the rubber used in the tire 1 is of low loss (high fuel efficiency), the electric resistance of the tire 1 is increased accordingly and the tire 1 tends to be electrically charged.

The electric resistance value (surface resistance value) of the surface of the conductive cord 2 is preferably 50 $\Omega$/sq. or less.

The conductive cord 2 can have a capability of preventing accumulation of air in the production (vulcanization) of the tire 1 (a capability as bleeder cord).

It is preferable that the conductive cord 2 at least include conductive fibers. Examples of conductive fibers include metal-containing fibers, carbon-containing fibers, and metal oxide containing fibers, and any one or more of there can be used. The term "metal-containing fiber" refers to fibers with a metal content of 5 to 100% by mass. Examples of metals and metal oxides include stainless steel, steel, aluminum, copper, and oxides of these.

The conductive cord 2 can only include conductive fibers or can further include non-conductive fibers in addition to conductive fibers. Examples of non-conductive fibers can include cotton, nylon, polyesters such as polyethylene terephthalate, and organic matters such as polypropylene, any one or more of these can be used. When the conductive cord 2 includes non-conductive fibers, the conductive cord 2 has a good elongation and good adhesiveness.

The conductive cord 2 is preferably has twisted yarn structure in which fibers are twisted.

In the following, unless otherwise specified, description regarding the conductive cord 2 shall be taken as description for each of the conductive cords 2.

The conductive cord 2 can be disposed at any position in the tire 1.

It is preferable that, as illustrated in Figs. 1, 2, 5, and 6, the conductive cord 2 extend from the bead portion 1c of the tire 1 to the tread portion 1a. This makes easier to ensure a conductive path formed of the conductive cord 2.

It is preferable that, as illustrated in Figs. 1 and 5, on the projection plane in the tire width direction, the conductive cord 2 extend substantially in a tire radial direction from the bead portion 1c of the tire 1 to the tread portion 1a. This can make it easier to ensure a conductive path formed of the conductive cord 2 and also can shorten the conductive path.

The conductive cord 2 can be disposed on both sides in relation to the tire equatorial plane CL, or can be disposed only on one side in relation to the tire equatorial plane CL.

When a plurality of conductive cords 2 are provided as illustrated in Figs. 1 and 5, the plurality of conductive cords 2 are preferably spaced from one another in the tire circumferential direction.

As illustrated in each of the embodiments in Figs. 2 and 6, the conductive cord 2 is preferably disposed to be exposed on at least one of surfaces of the carcass 5 on the tire outer side and the tire inner side. This makes it easier to ensure a conductive path formed of the conductive cord 2.

In each of the embodiments in Figs. 2 and 6, a conductive cord 2 is sewn into the carcass 5. In this regard, the conductive cord 2 may be wound around the carcass 5.

The tread rubber 7 may include a conductive rubber 7a. The conductive rubber 7a has a higher electrical conductivity than those of portions other than the conductive rubber 7a in the tread rubber 7. The value of electric resistance (specific volume resistivity) of the conductive rubber 7a is preferably less than $1.0 \times 10^7\ \Omega\cdot cm$, for example.

It is preferable that, as illustrated in each of the embodiments in Figs. 2 and 6, the conductive rubber 7a extend from a tire radially outer side surface of the cushion rubber 7b in the tread rubber 7 to a tread surface. The conductive rubber 7a is preferably extends over the entire circumference in the tire circumferential direction.

The conductive path through the conductive cord 2 can extend through, for example, the vehicle body, the suspension, the rim, the chafer 3, the conductive cord 2, the cushion rubber 7b, the conductive rubber 7a, and the road surface.

The communication device 10 will be described below.

The communication device 10 can be of any configuration as long as the configuration enables wireless communication between the communication device 10 and a predetermined external device (for example, a reader or reader/writer) located at the exterior of the tire 1, and thus, there is no particular limitation on the configuration of the communication device 10.

The communication device 10 preferably includes a RF tag. The RF tag is also referred to as "RFID tag". The RF tag is preferably of passive type but can also be of active type.

The communication device 10 can include an accelerometer detecting the acceleration of the tire 1, and an internal pressure sensor detecting the internal pressure of the tire 1, and the like, instead of or in addition to the RF tag.

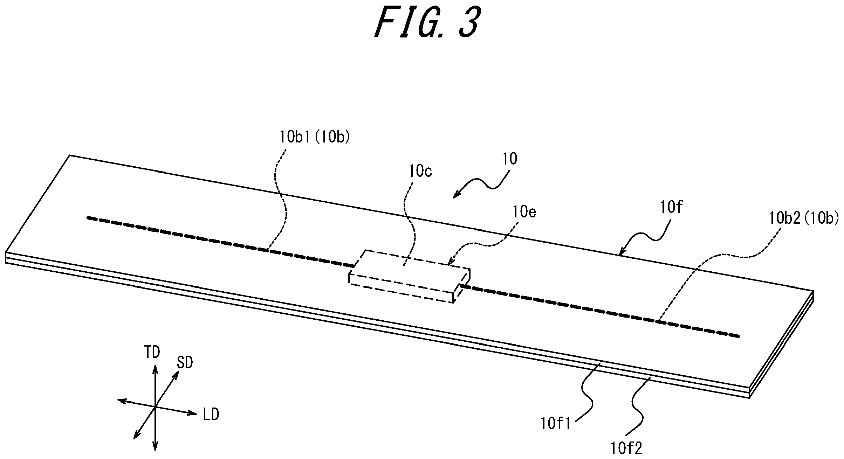

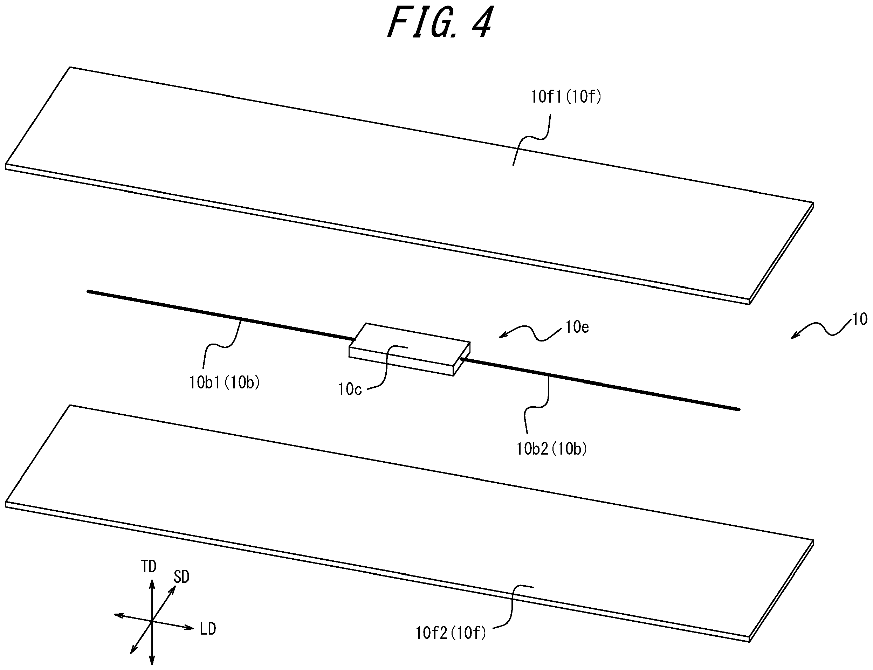

Figs. 3 and 4 illustrates an example of the communication device 10. In this example, the communication device 10 includes a RF tag. In this example, the communication device 10 includes a RF tag 10e and a coating portion 10f. The RF tag 10e includes an IC chip 10c and an antenna portion 10b. The RF tag 10e is of passive type.

The IC chip 10c operates, for example, by an induced electromotive force generated by a radio wave received by the antenna portion 10b. The IC chip 10c includes a controller and a memory unit, for example.

The memory unit can store any information. For example, the memory unit can store identification information of the tire 1. The identification information of the tire 1 is, for example, identification information that is unique to the tire 1 and can identify each tire from the tires, such as the manufacturer of the tire 1, the manufacturing plant of the tire 1, and the date of manufacture of the tire 1. The memory unit can store tire historical information such as the running distance of a tire, the number of sudden braking, the number of sudden starting, and the number of sudden cornering situation. It is also possible that a sensor detecting, for example, a tire internal temperature, a tire internal pressure, a tire acceleration is provided in a tire inner cavity and the memory unit stores information detected by the sensors. In this case, the RF tag 10e can wirelessly communicate with the sensor via the antenna portion 10b to obtain the information detected by the sensor.

The controller is configured to enables reading of information from the memory unit.

The antenna portion 10b includes a pair of antennas 10b1, 10b2. The pair of antenna 10b1, 10b2 are connected to opposite ends of the IC chip 10c, respectively. The antenna portion 10b is configured to allow for transmitting information to and receiving information from the above-described predetermined external device located at the exterior of the tire 1. In the example in Figs. 3 and 4, each of the antennas 10b1, 10b2 extends in a straight line, but each of the antennas 10b1, 10b2 may extend to have any shape such as waved shape.

The entirety of the RF tag 10e is covered with the coating portion 10f. The coating portion 10f is formed of a rubber or a resin, for example.

In this example, the coating portion 10f includes a pair of sheet-shaped coating members 10f1, 10f2. The pair of coating members 10f1, 10f2 are stacked to sandwich the RF tag 10e between the pair of coating members 10f1, 10f2. The pair of coating members 10f1, 10f2 are preferably fixed to each other, for example, by adhesion.

In this regard, the coating portion 10f may be constituted by one member.

In this example, the coating portion 10f has a quadrilateral shape in a planar view. However, the coating portion 10f can have any shape in a planar view.

The communication device 10 may not include the coating portion 10f, that is, can be constituted solely by the RF tag 10e.

By using the antenna portion 10b, the communication device 10 configured as described above can receive information transmitted on a radio wave or a magnetic field from the above-described predetermined external device. Rectification (in the case of radio wave) or resonance (in the case of a magnetic field) generates power in the antenna portion 10b of the communication device 10, and the memory unit and the controller of the IC chip 10c perform a predetermined operation. For example, the controller reads information in the memory unit and returns (transmits) the information on a radio wave or a magnetic field from the antenna portion 10b to the above-described predetermined external device. The above-described predetermined external device receives the radio waves or the magnetic fields from the communication device 10. The above-described predetermined external device can retrieve the received information to obtain the information stored in the memory unit of the IC chip 10c in the communication device 10.

In connection with the matter described above, the communication device 10 can have any configuration other than the configuration illustrated in this example.

The communication device 10 can be provided with a longitudinal direction LD, a short-side direction SD, and a thickness direction TD. The longitudinal direction LD, the short-side direction SD, and the thickness direction TD are perpendicular to one another.

As illustrated in Figs. 3 and 4, when the communication device 10 includes the RF tag 10e, the longitudinal direction LD of the communication device 10 is parallel to the extending direction of the antenna portion 10b. When the antennas 10b 1, 10b2 of the antenna portion 10b have waved shapes, the extending direction of the antenna portion 10b refers to the extending direction of the amplitude centerline of each of the antennas 10b 1, 10b2. In the communication device 10, when the communication device 10 includes the coating portion 10f, the thickness direction TD of the communication device 10 refers to the thickness direction of the coating portion 10f, and when the communication device 10 does not include the coating portion 10f, refers to the thickness direction of the IC chip 10c.

The length of the RF tag 10e in the longitudinal direction LD is preferably 20 mm or more or 50 mm or more, for example. The length of the RF tag 10e in the longitudinal direction LD is preferably 100 mm or less or 70 mm or less, for example.

The length of the RF tag 10e in the short-side direction SD is preferably 10 mm or less or 8 mm or less, for example.

The length of the RF tag 10e in the thickness direction TD is preferably 5 mm or less or 2 mm or less, for example.

When the communication device 10 includes the coating portion 10f, the length of the communication device 10 in the longitudinal direction LD is preferably 30 mm or more or 60 mm or more, for example. The length of the RF tag 10e in the longitudinal direction LD is preferably 110 mm or less or 80 mm or less, for example.

When the communication device 10 includes the coating portion 10f, the length of the communication device 10 in the short-side direction SD is preferably 20 mm or less or 15 mm or less, for example.

When the communication device 10 includes the coating portion 10f, the length of the communication device 10 in the thickness direction TD is preferably 6 mm or less or 3 mm or less, for example.

The thickness of each of the coating members 10f1, 10f2 of the coating portion 10f is preferably 0.5 mm or more, for example. The thickness of each of the coating members 10f1, 10f2 of the coating portion 10f is preferably 1 mm or less, for example.

The communication device 10 is embedded in the tire body 1M. The communication device 10 can be disposed at any position in the tire body 1M.

In producing a tire 1, the raw tire constituting the tire body 1M and the communication device 10 are accommodated in a mold for forming a tire and subjected to vulcanization molding.

In each of the embodiments disclosed in this description, as illustrated in Figs. 1 and 5, the number of intersection points of the communication device 10 and the one or more conductive cords 2 is less than two (that is, one or zero) on the projection plane in the tire width direction. In the embodiment in Fig. 1, the number of the intersection points is one. In the embodiment in Fig. 5, the number of the intersection point is zero.

In the cross sections in the tire width direction passing through the communication device 10 illustrated in Figs. 2 and 6, the conductive cord 2 does not appear in such cross sections in the tire width direction. However, in Figs. 2 and 6, the conductive cord 2 is represented by a dashed line for convenience.

If an electrically charged object is present near the communication device 10, communication between the predetermined external device and the communication device 10 may be inhibited. However, by employing the above-described configuration, the communication device 10 can be sufficiently spaced from the conductive cord 2. In consequence, it is possible to suppress inhibition of the communication performance of the communication device 10 by setting the conductive cord 2 and improve the communication stability of the communication device 10. In addition, the communication device 10 can be sufficiently spaced from the conductive cord 2 to suppress the rupture of the conductive cord 2.

In each of the embodiments disclosed in this description, it is preferable that, as illustrated in Fig. 5, the communication device 10 and the one or more conductive cords 2 do not intersect with each other (that is, the number of the intersection points of the communication device 10 and the one or more conductive cords 2 is zero) on the projection plane in the tire width direction.

As a result, the communication device 10 can be further spaced from the conductive cord 2 to improve the communication stability of the communication device 10 further.

For the purpose of improving the communication stability of the communication device 10, it is preferable that, as illustrated in Figs. 1 and 5, the number of intersection points the RF tag 10e of the communication device 10 and the one or more conductive cords 2 be less than two (that is, one or zero) on the projection plane in the tire width direction. In the embodiment in Fig. 1, the number of the intersection points is one. In the embodiment in Fig. 5, the number of the intersection points is zero.

From a similar standpoint, it is preferable that, as illustrated in Fig. 5, the RF tag 10e of the communication device 10 and the one or more conductive cords 2 do not intersect with each other (that is, the number of the intersection points of the RF tag 10e of the communication device 10 and the one or more conductive cords 2 is zero) on the projection plane in the tire width direction.

In the embodiment in Fig. 2, the communication device 10 and the conductive cord 2 are disposed on the same side in relation to the tire equatorial plane CL of the tire 1.

However, as illustrated in the embodiment in Fig. 6, one or more conductive cords 2 can be disposed only on one side in relation to the tire equatorial plane CL of the tire 1 and the communication device 10 can be disposed solely disposed only on the other side in relation to the tire equatorial plane CL. In this case, the conductive cord 2 is not disposed on a side that is one of both sides in relation to the tire equatorial plane CL and on which the communication device 10 is disposed.

As a result, the communication device 10 can be further spaced from the conductive cord 2 to improve the communication stability of the communication device 10 further.

In each of the embodiments disclosed in this description, it is preferable that the communication device 10 and the conductive cord 2 be not in contact with each other. As a result, the communication stability of the communication device 10 stability can be improved.

From a similar standpoint, it is preferable that the RF tag 10e of the communication device 10a and the conductive cord 2 be not in contact with each other.

In each of the embodiments disclosed in this description, as illustrated in Figs. 1, 2, 5, and 6, the communication device 10 is preferably embedded in the tire side portion 1d of the tire 1.

In general, the metal may weaken a radio wave between the communication device 10 and the above-described predetermined external device (for example, a reader or reader/writer) to reduce communication performance regarding communication between the communication device 10 and the above-described predetermined external device, and in consequence, the communication distance between the communication device 10 and the above-described predetermined external device may be shortened. In the tire body 1M, a metal (for example, steel) can be used in the belt 6, the bead core 4a, and the like. In addition, the tire side portion 1d generally has less amount of metal than the tread portion 1a. Therefore, by disposing the communication device 10 in the tire side portion 1d, in comparison to the case where the communication device 10 is disposed in the tread portion 1a, the communication performance can be improved and the communication distance between the communication device 10 and the above-described predetermined external device can be lengthened.

The communication device 10 is preferably embedded in a portion of the tire side portion 1d of the tire body 1M on the tire widthwise outer side relative to the carcass 5.

The communication device 10 is preferably oriented in such a way that the thickness direction TD of the communication device 10 is substantially along the tire width direction (Figs. 2 and 6).

In each of the embodiments disclosed in this description, the direction toward which the communication device 10 is oriented (the orientation of the communication device 10) is arbitrary. However, from a standpoint of, for example, the durability of the communication device 10, the communication device 10 is preferably oriented in such a way that the longitudinal direction LD of the communication device 10 is substantially along the tire circumferential direction, as illustrated in each of the embodiments in Figs. 1 and 5. In this regard, the communication device 10 can be oriented in such a way that the short-side direction SD of the communication device 10 is substantially along the tire circumferential direction.

In each of the embodiments disclosed in this description, the communication device 10 is preferably disposed in the sidewall portion 1b, as illustrated in each of the embodiments in Figs. 1, 2, 5, and 6. The sidewall portion 1b generally tends to have less amount of metal than the bead portion 1c. Therefore, by disposing the communication device 10 in the sidewall portion 1b, in comparison to the case where the communication device 10 is disposed in the bead portion 1c, the communication performance can be improved and the communication distance between the communication device 10 and the above-described predetermined external device can be lengthened.

In each of the embodiments disclosed in this description, as illustrated in Fig. 2, the tire radially outer end 10u of the communication device 10 (more preferably, the entirety of the communication device 10) is preferably located on the tire radially outer side relative to the tire radially outer end of the bead core 4a. More preferably, the tire radially outer end 10u is located on the tire radially outer side relative to the tire radial center of the bead filler 4b. For example, the tire radially outer end 10u is preferably located on the tire radially outer side relative to the tire radially outer end 4bu of the bead filler 4b.

The above-described configuration is particularly preferable when the tire 1 is a passenger vehicle pneumatic tire.

In each of the embodiments disclosed in this description, in a case where the communication device 10 is disposed in the sidewall portion 1b as described above, as illustrated in the example in Fig. 2, the tire radially outer end 10u of the communication device 10 is preferably positioned on the tire radially inner side relative to the tire radially outer end 5e of the ply turn-up portion 5T of the carcass 5. As a result, the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved

The tire radial distance between the tire radially outer end 10u of the communication device 10 and the tire radially outer end 5e of the ply turn-up portion 5T of the carcass 5 is preferably 3 to 30 mm, and more preferably 5 to 15 mm.

The above-described configuration is particularly preferable when the tire 1 is a passenger vehicle pneumatic tire.

In each of the embodiments disclosed in this description, as illustrated in the example in Fig. 2, the tire radially outer end 5e of the ply turn-up portion 5T of the carcass 5 is preferably positioned on the tire radially outer side relative to the tire radially outer end 4bu of the bead filler 4b. In this regard, the tire radially outer end 5e of the ply turn-up portion 5T of the carcass 5 can be positioned at the same tire radial position as that of the tire radially outer end of the bead filler 4b or can be positioned on the tire radially inner side relative to the tire radial position of the tire radially outer end of the bead filler 4b.

In each of the embodiments disclosed in this description, the tire radially outer end 5e of the ply turn-up portion 5T of the carcass 5 can be positioned on the tire radially outer side relative to the tire maximum width position of the tire body 1M, and can also be positioned at the same tire radial position as that of the tire maximum width position of the tire body 1M, and can also be positioned on the tire radially inner side relative to the tire maximum width position of the tire body 1M. The term "tire maximum width position of the tire body 1M" refers to a tire radial position at which the dimension of the tire body 1M in the tire width direction becomes maximum.

In each of the embodiments disclosed in this description, as illustrated in the example in Fig. 2, the communication device 10 is preferably in contact with a surface on the tire widthwise outer side of the carcass 5, and more preferably in contact with a surface on the tire widthwise outer side of the ply turn-up portion 5T of the carcass 5.

The above-described configuration is particularly preferable when the tire 1 is a passenger vehicle pneumatic tire.

In each of the embodiments disclosed in this description, the tire rubber composition described in detail below is preferably used in at least a portion of the rubber constituting the tire 1 (for example, at least one of the side rubber 8, the tread rubber 7, (such as the entirety of the tread rubber 7, cushion rubber 7b, and the belt under cushion rubber), the coating rubber 5r of the carcass ply 5a, the squeegee rubber between the carcass plies 5a, the coating rubber of the belt layer 6a, and the bead filler 4b). By using the tire rubber composition, it is possible to achieve a tire 1 that has low rolling resistance and high durability and in which increase in the electric resistance is suppressed without degradation of reinforcing ability and durability performance.

In particular, when the tire rubber composition is used in the side rubber 8, lower loss can be achieved, and in consequence, the rolling resistance can be reduced. In addition, the electrical conductivity of the side rubber 8 is reduced, and the communication stability of the communication device 10 can be improved accordingly.

< Tire rubber composition >

The above-described tire rubber composition is obtained by blending 35 to 50 parts by mass of carbon black with a nitrogen adsorption specific surface area (N2SA) of 30 to 43 $m^2$/g and 5 parts by mass or less of oil, based on 100 parts by mass of rubber component including 20 to 40 parts by mass of styrene butadiene rubber and 60 to 80 parts by mass of natural rubber.

Examples of the rubber components used in the above-described tire rubber composition at least include a styrene butadiene rubber (SBR) and a natural rubber (NR).

The content of styrene butadiene rubber is preferably 20 to 40 parts by mass based on 100 parts by mass of rubber component. By setting the content of the styrene butadiene rubber to be 20 parts by mass or more, low-strain crack propagation resistance can be improved to enhance the processability of the unvulcanized rubber. By setting the content of the styrene butadiene rubber to be 40 parts by mass or less, further lowered loss can be achieved.

Examples of styrene butadiene rubbers that can be used include solution-polymerized styrene butadiene rubbers, emulsion-polymerized styrene butadiene rubbers, and modified styrene butadiene rubbers.

The content of the natural rubber is preferably 60 to 80 parts by mass based on 100 parts by mass of rubber component. By setting the content of the natural rubber to be 60 parts by mass or more, the high-strain crack propagation resistance can be improved. By setting the content of the natural rubber to be 80 parts by mass or less, the processability of the unvulcanized rubber can be improved and the costs can be reduced.

Examples of the natural rubber include natural rubbers used in tire industry, such as RSS#3, TSR20, and SIR20.

In addition to the natural rubbers (NR) and styrene butadiene rubbers (SBR) described above, if required, it is possible to use at least one of butadiene rubbers (BR), isoprene rubbers (IR), butyl rubbers (IIR), halogenated butyl rubbers, chloroprene rubbers (CR), acrylonitrile-butadiene rubbers (NBR), ethylene-propylene-diene terpolymers (EPDM).

As a carbon black used in the above-described tire rubber composition, a carbon black having a nitrogen adsorption specific surface area (N2SA, measured in accordance with JIS K 6217-2:2001) of 30 to 43 $m^2$/g is used. The reason why this nitrogen adsorption specific surface area (N2SA) of the carbon black is limited to the above-described range is because the dispersibility of carbon black is improved by using a carbon black with a large particle size. Preferably, the above-described nitrogen adsorption specific surface area (N2SA) is 33 to 40 $m^2$/g.

As a carbon black having such properties, it is possible to use FEF, GPF, SRF, and the like.

The content of the above-described carbon black is preferably 35 parts by mass or more based on 100 parts by mass of rubber component. As a result, the mechanical strength of the rubber can be ensured.

The content of the above-described carbon black is preferably 50 parts by mass or less based on 100 parts by mass of rubber component. This allows for lower loss and also reduces the electrical conductivity, and the communication stability of the communication device 10 can be improved accordingly.

Examples of oils used in the above-described tire rubber composition include at least one oil selected from paraffin-based oils, naphthene-based oils, aromatic oils and aromatic-compound-based oils, and these oils can be commercially available products.

For example, as a paraffin-based oil, it is possible to use commercially available products such as a paraffin-based oil under the trade name "Super Oil Y22" manufactured by JX Nippon Oil & Energy Corporation. The naphthene-based oil can be hydrogenated or unhydrogenated. As a naphthene-based oil, it is possible to use commercially available products such as "straight asphalt-containing naphthene-based oil manufactured by SANKYO YUKA KOGYO K.K." under the trade name "A/OMIX".

The content of the above-described oil is 5 parts by mass or less (including 0 parts by mass) based on 100 parts by mass of rubber component.

The mechanical strength of the rubber can be improved by setting the content of the above-described oil to be 5 parts by mass or less. Even in the case where the above-described oil is not included (0 parts by mass), a compounding agent such as a carbon black can be sufficiently dispersed to obtain necessary rubber properties. In particular, the content of the oil is preferably 0 to 3 parts by mass.

For the purpose of providing additional electrical conductivity to decrease the electric resistance further and for the purpose of improving the durability performance further, it is preferable that the above-described tire rubber composition further include at least one of Ketjen black and a carbon nanotube (CNT).

As carbon nanotubes (CNT) that can be used, there may be mentioned graphene sheets in the form of rounded rods or in the form of threads, vapor grown carbon fibers (VGCF), and the like and C100 (manufactured by Arkemasya) or NC7000 (manufactured by Nanocyl), which are commercially available products of the foregoing, is usable. These carbon nanotubes (CNT) provides additional electrical conductivity, and unlike the above-described carbon black, interacts less with the rubber, resulting in lower elastic modulus the high-strain region of the high strain curve of the stress-strain curve and an increased elongation at break (Eb).

As Ketjen black, it is possible to use various grades of Ketjen black in which hollow shell-shaped particles is present and that has high electrical conductivity. Examples of Ketjen black that can be used include at least one of Ketjen black EC300J [granulated] manufactured by Lion Corporation, Ketjen black EC600JD [granulated], CARBON ECP [powder of Ketjen black EC300J], CARBON ECP600JD [powder of Ketjen black EC600JD], and Lionite.

The total compounding amount of Ketjen black and the carbon nanotube is preferably 0.1 to 6 parts by mass, more preferably 1.0 to 5 parts by mass based on 100 parts by mass of rubber component.

By setting the total compounding amount of Ketjen black and the carbon nanotube to be 0.1 parts by mass or more, a rubber compound can be provided with electrical conductivity. By setting such total compounding amount to be 6 parts by mass or less, decrease in the low loss property of the rubber can be prevented.

In the above-described tire rubber composition, a carbon black, Ketjen black and a carbon nanotube with a nitrogen adsorption specific surface area (N2SA) satisfying the above-described range are used as fillers. However, for the purpose of providing better electrical conductivity and for the purpose of further improving the crack propagation resistance to improve the durability performance further, it is preferable that at least one of Ketjen black and a carbon nanotube be blended in an amount of preferably 2 to 15%, more preferably 2.5 to 12.5%, by mass of the fillers.

As fillers other than carbon black, Ketjen black, carbon nanotube described above, it is possible to use silica, clay, talc, calcium carbonate, and the like.

In addition to the above-described components, other components can be appropriately selected according to the purpose or the need and blended into the above-described tire rubber composition. Examples of the other components include vulcanizing agents such as sulfur, vulcanization accelerators such as thiazole-based and sulfenamide-based vulcanization accelerators, vulcanizing co-agents, zinc oxide (zinc white), stearic acid, age resisters, antioxidants, antiozonants, colorants, lubricants, silane coupling agent, foaming agents, additives such as foaming aids, as well as a variety of known compounding ingredients ordinally used in the tire industry. The other components described above can be commercially available products.

The above-described tire rubber composition can be prepared by blending a carbon black, an oil, and other components having the above-described properties into the above-described rubber component, and in addition, kneading Ketjen black, carbon nanotube, zinc white, stearic acid, an age resister, sulfur, a vulcanization accelerator, and additives appropriately selected according to the purpose or the need into the rubber component.

There is no particular limitation regarding the conditions of kneading described above. Conditions such as the capacity of kneader, the rotational velocity of the rotor, the ram pressure, the kneading temperature, the kneading time, and the type of the kneader can be appropriately selected according to the purpose. Examples of such a kneader include Banbury mixers, Intermix, kneaders, and rolls ordinally used in kneading of a rubber composition.

In the case where the compounding amount of the styrene butadiene rubber in the above-described tire rubber composition is A parts by mass and the compounding amount of the natural rubber is B parts by mass, a rubber composition in which a carbon black with a nitrogen adsorption specific surface area (N2SA) of 30 to 43 $m^2/g$ included in the above-described tire rubber composition is blended in an amount of A * 100 / (A + B) (% by mass) based on A parts by mass of styrene butadiene rubber is taken as rubber composition X. In addition, a rubber composition in which a carbon black with a nitrogen adsorption specific surface area (N2SA) of 30 to 43 $m^2/g$ included in the above-described tire rubber composition is blended in an amount of B * 100 / (A + B) (% by mass) based on B parts by mass of natural rubber is taken as rubber composition Y. Also, the above-described tire rubber composition is taken as rubber composition Z. In this case, when moduli at 50% elongation of the rubber compositions X, Y, and Z are taken as Mdx, Mdy, and Mdz (MPa), respectively, it is preferable that Mdx, Mdy, and Mdz satisfy the formula (I):

$$0.9 \times \{ \mathrm{Mdx} * \mathrm{A} / (\mathrm{A} + \mathrm{B}) + \mathrm{Mdy} * \mathrm{B} / (\mathrm{A} + \mathrm{B}) \} \geq \mathrm{Mdz} \cdots (\mathrm{I}).$$

When the tire rubber composition satisfies the formula (I), there is no degradation of reinforcing ability and durability performance, increase in the electric resistance is further suppressed, the rolling resistance is further reduced, and in addition, higher durability is achieved.

As described above, the above-described tire rubber composition is applied to at least one member selected from the ply coating rubber of the carcass ply, the belt coating rubber of the belt layer, the squeegee rubber between the carcass plies, the cushion rubber, the belt under cushion, and the bead filler rubber. The tire rubber composition is preferably applied to a ply coating rubber because the amount of the rubber used for the ply coating rubber is large and this has a significant influence on the loss property of the entirety of the tire, and also, the ply coating rubber is positioned at the center of a conductive path from the trim to the tread. As a result, a pneumatic tire establishing a balance between lower loss, crash resistance/reinforcing ability, electrical conductivity can be achieved.

By using the tire rubber composition configured as described above, the durability performance in high-strain region is improved by setting the amount of natural rubber (NR) to be in a specific range, and also, the low-strain durability is improved without deterioration of lowered loss by setting the amount of styrene butadiene rubber (SBR) to be in a specific range. In addition, the lowered loss of the rubber is achieved by using a carbon black with a nitrogen adsorption specific surface area (N2SA) limited to the above-described range, and also, the reinforcing ability is improved by setting the amount of the oil to be in a predetermined amount or less. Therefore, the tire rubber composition configured as described above can be helpful to provide a tire that has low rolling resistance and high durability and also has reinforcing ability and durability performance equivalent to those of conventional tire, and in the tire, increase in the electric resistance is suppressed.

In addition, by inclusion of 0.1 to 6 parts by mass of at least one of Ketjen black and a carbon nanotube, a tire rubber composition having better electrical conductivity without deterioration of dispersion defect and low loss property is provided. It is known that conductive materials generally have poor dispersibility, deteriorates low loss property, and weakly interact with the rubbers. However, as a result of studying the types and the number of parts of the conductive materials, we can provide additional electrical conductivity, without deterioration of dispersion defect and lowered loss, by blending at least one of Ketjen black and a carbon nanotube at a specific number of parts. In addition, by utilizing low reinforcing ability of the above-mentioned conductive materials, the tire rubber composition has better durability performance.

In addition, the above-described tire rubber composition in which at least one of Ketjen black and a carbon nanotube is blended in an amount of 2 to 15% by mass of the fillers is advantageous because the tire rubber composition still has the above-described lowered loss and reinforcing ability, and yet provides additional electrical conductivity and better durability performance.

INDUSTRIAL APPLICABILITY

Our tire can be suitable for use in any type of pneumatic tire, particularly a passenger vehicle pneumatic tire.

REFERENCE SIGNS LIST

| | |
|---|---|
| 1 | Tire |
| 1M | Tire body |
| 1a | Tread portion |
| 1b | Sidewall portion |
| 1c | Bead portion |
| 1d | Tire side portion |
| 2 | Conductive cord |
| 3 | Chafer |
| 4a | Bead core |
| 4b | Bead filler |
| 4bu | Tire radially outer end of bead filler |
| 5 | Carcass |
| 5a | Carcass ply |
| 5c | Carcass cord |
| 5r | Coating rubber |
| 5M | Ply main body |
| 5T | Ply turn-up portion |
| 5e | Tire radially outer end of ply turn-up portion of carcass |
| 6 | Belt |
| 6a | Belt layer |
| 7 | Tread rubber |
| 7a | Conductive rubber |
| 7b | Cushion rubber |
| 8 | Side rubber |
| 9 | Inner liner |
| 10 | Communication device |
| 10e | RF tag |
| 10b | Antenna portion |
| 10b1, 10b2 | Antennas |
| 10f | Coating portion |
| 10f1, 10f2 | Coating members |
| 10c | IC chip |
| 10u | Tire radially outer end of communication device |
| CL | Tire equatorial plane |
| WD | Tire width direction |
| RD | Tire radial direction |

CD          Tire circumferential direction
LD          Longitudinal direction of communication device
SD          Short-side direction of communication device
TD          Thickness direction of communication device

**Claims**

1.  A tire, comprising:

    one or more conductive cords embedded in the tire; and
    a communication device embedded in the tire, wherein
    a number of intersection points of the communication device and the one or more conductive cords is less than
    two on a projection plane in a tire width direction.

2.  The tire according to claim 1, wherein
    on the projection plane in the tire width direction, each of the one or more conductive cords extends substantially
    in a tire radial direction from a bead portion of the tire to a tread portion of the tire.

3.  The tire according to claim 1 or 2, wherein
    a content of carbon black in a side rubber of the tire is 50 parts by mass or less based on 100 parts by mass of
    rubber component.

4.  The tire according to any one of claims 1 to 3, wherein
    the communication device and the one or more conductive cords do not intersect with each other on the projection
    plane in the tire width direction.

5.  The tire according to any one of claims 1 to 4, wherein

    the one or more conductive cords is disposed only on one side in relation to a tire equatorial plane in the tire, and
    the communication device is disposed only on the other side in relation to the tire equatorial plane.

6.  The tire according to any one of claims 1 to 5, wherein
    the communication device includes a RF tag.

# FIG. 1

# FIG. 2

A-A Section

# FIG. 3

EP 4 446 135 A1

# FIG. 4

10f1 (10f)

10

10e

10b1 (10b)

10c

10b2 (10b)

TD

SD

LD

10f2 (10f)

EP 4 446 135 A1

# FIG. 5

FIG. 6

## INTERNATIONAL SEARCH REPORT

| International application No. |
|---|
| **PCT/JP2022/020440** |

### A. CLASSIFICATION OF SUBJECT MATTER

**B60C 19/00**(2006.01)i; **B60C 1/00**(2006.01)i; **B60C 19/08**(2006.01)i
FI: B60C19/00 B; B60C1/00 B; B60C19/08

According to International Patent Classification (IPC) or to both national classification and IPC

### B. FIELDS SEARCHED

Minimum documentation searched (classification system followed by classification symbols)

B60C19/00; B60C1/00; B60C19/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-83044 A (TOYO TIRE CORPORATION) 04 June 2020 (2020-06-04) claims 1, 6, paragraphs [0016]-[0018], [0024]-[0029], fig. 1, 2 | 1, 4, 6 |
| Y | | 3 |
| Y | WO 2019/054227 A1 (SUMITOMO RUBBER INDUSTRIES, LTD) 21 March 2019 (2019-03-21) paragraphs [0001], [0019]-[0024], [0027], [0032], [0043] | 3 |
| A | JP 2019-217998 A (BRIDGESTONE CORP) 26 December 2019 (2019-12-26) claims, fig. 7, 8 | 1-6 |
| A | JP 2003-507230 A (THE GOODYEAR TIRE & RUBBER COMPANY) 25 February 2003 (2003-02-25) claims, fig. 6 | 1-6 |
| A | JP 2021-127094 A (YOKOHAMA RUBBER CO LTD) 02 September 2021 (2021-09-02) claims | 1-6 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2022/020440** |

### C. DOCUMENTS CONSIDERED TO BE RELEVANT

| Category* | Citation of document, with indication, where appropriate, of the relevant passages | Relevant to claim No. |
|---|---|---|
| A | US 2021/0070110 A1 (COMPAGNIE GENERALE DES ETABLISSEMENTS MICHELIN) 11 March 2021 (2021-03-11) paragraph [0126] | 1-6 |
| A | JP 2017-124730 A (BRIDGESTONE CORP) 20 July 2017 (2017-07-20) claims | 1-6 |

Form PCT/ISA/210 (second sheet) (January 2015)

## INTERNATIONAL SEARCH REPORT
### Information on patent family members

International application No.

**PCT/JP2022/020440**

| Patent document cited in search report | | | Publication date (day/month/year) | Patent family member(s) | | | Publication date (day/month/year) |
|---|---|---|---|---|---|---|---|
| JP | 2020-83044 | A | 04 June 2020 | US claims 1, 6, paragraphs [0031]-[0033], [0039]-[0044], fig. 1, 2 EP CN | 2020/0164605 3656584 111216494 | A1 A1 A | |
| WO | 2019/054227 | A1 | 21 March 2019 | EP paragraphs [0001], [0019]-[0024], [0027], [0032], [0043] | 3677439 | A1 | |
| JP | 2019-217998 | A | 26 December 2019 | WO | 2019/244778 | A1 | |
| JP | 2003-507230 | A | 25 February 2003 | WO claims, fig. 6 EP | 2001/012452 1210234 | A1 A1 | |
| JP | 2021-127094 | A | 02 September 2021 | (Family: none) | | | |
| US | 2021/0070110 | A1 | 11 March 2021 | WO EP CN | 2019/180358 3768528 112105513 | A1 A1 A | |
| JP | 2017-124730 | A | 20 July 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021199586 A
- JP 2017124730 A